# EUROPEAN PATENT SPECIFICATION

(11) **EP 4 151 489 B1**
(45) Date of publication and mention of the grant of the patent: **22.07.2026**
(21) Application number: 21197733.5
(22) Date of filing: 20.09.2021
(51) Int. Cl.: B60W 50/02, B60W 50/00

(54) **VEHICLE CONTROL FOR IMPROVED MINIMUM RISK MANEUVERS**
FAHRZEUGSTEUERUNG FÜR VERBESSERTE MANÖVER MIT MINIMALEM RISIKO
COMMANDE DE VÉHICULE POUR DES MANOEUVRES À RISQUE MINIMAL AMÉLIORÉ

(43) Date of publication of application: 22.03.2023
(73) Proprietor: Volvo Autonomous Solutions AB, 405 08 Göteborg (SE)
(72) Inventor: HELFRICH, Thorsten, 416 60 Göteborg (SE)
(74) Representative: Zacco Sweden AB

(56) References cited:
- WO-A1-2020/224778
- US-A1- 2010 082 195
- US-A1- 2019 064 823
- US-A1- 2020 039 528

## Description

### TECHNICAL FIELD

The present disclosure relates to vehicle motion management for autonomous or semi-autonomous heavy-duty vehicles, i.e., coordinated control of motion support devices such as service brakes, propulsion devices and power steering. Although the invention is not restricted to a particular type of vehicle, it can be applied with advantage in autonomously operated heavy-duty vehicles such as trucks, buses, and in construction machines.

### BACKGROUND

Modern heavy-duty vehicles may comprise autonomous drive (AD) systems and advanced driver-assistance systems (ADAS), enabling the vehicles to drive autonomously or semi-autonomously based on sensor information from onboard sensors like radar transceivers and vision-based sensors in combination with advanced signal processing algorithms.

However, an AD or ADAS system may encounter problems, such as various forms of malfunction and outage, that lead to loss of crucial signal processing functionality or important sensor information necessary for safely operating the vehicle. In such cases, a minimum risk maneuver may need to be executed in order to bring the vehicle to a safe state, such as a stationary position at the side of the road. Both the control actions comprised in the minimum risk maneuver and the configuration of the safe state depend on vehicle parameters such as the vehicle type and the vehicle speed, and on environmental factors such as road geometry and traffic situation. It is preferred that the vehicle is capable of executing the minimum risk maneuver even in a situation where the AD or ADAS system is no longer operational, and where significant parts of the vehicle control system is malfunctioning.

WO2020160860A1 discloses systems and methods for minimum risk maneuver planning and execution. WO 2020/224778 A1 controls vehicles such that minimum risk maneuvers are not precluded from future vehicle states.

US 2019/064823 A1 discloses a system for monitoring the operation of AD and ADAS systems.

Still, there is a need for improved methods and systems for minimum risk maneuver execution.

### SUMMARY

It is an object of the present disclosure to provide improved systems and methods for minimum risk maneuver planning and execution. This object is at least in part obtained by a backup control unit for controlling motion of a heavy-duty vehicle during a minimum risk maneuver. The backup control unit is arranged to receive data indicative of a planned sequence of vehicle control commands from a main vehicle control unit. The backup control unit comprises a first vehicle model configured to map the planned sequence of vehicle control commands into a desired vehicle behavior and to obtain a measured vehicle behavior from one or more vehicle sensors. Furthermore, the back-up control unit is arranged to determine an adjusted sequence of vehicle control commands based on the planned sequence of vehicle control commands and on a deviation between the desired vehicle behavior and the measured vehicle behavior, and to transmit the adjusted sequence of vehicle control commands to a motion support device (MSD) control unit of the vehicle.

Communicating a planned minimum risk maneuver from the main vehicle control unit to the backup control unit in the form of a planned sequence of vehicle control commands, rather than e.g., in the form of a planned trajectory, has the advantage of simplifying the implementation of the backup control unit, as it removes the need for trajectory tracking functionality in the backup control unit.

By also including the first vehicle model in the backup control unit, it is possible to reduce the risk of undesired lateral and longitudinal movement that might accumulate during execution of the minimum risk maneuver. Steering errors can occur, e.g., due to changes in wind conditions or road banking or result from shifts in the steering system. For instance, relay linkages within the steering system are likely to move as the suspension of the vehicle travels up and down or rolls. Without continuous feedback regarding the state of the vehicle, these errors can accumulate during execution of the minimum risk maneuver and result in the vehicle not following the desired trajectory despite execution of the planned sequence of commands. By using the first vehicle model to find the desired vehicle state and comparing it to a measured vehicle state, deviations between the desired and measured state can be identified by the backup control unit and the planned sequence of vehicle control commands can be adjusted so that the desired vehicle state may be reached. Thus, a more robust minimum risk maneuver execution is obtained, which is able to account for at least some unexpected disturbance.

According to some aspects, the first vehicle model may be a static vehicle model, such as a yaw gain model. According to other aspects, the first vehicle model may be a dynamic vehicle model, such as a linear one-track model.

A static vehicle model is a vehicle model in which the output depends only on the input at that time, rather than also depending on previous inputs. Dynamic vehicle models yield outputs that depend also on past inputs, i.e., they can be said to have memory. Static vehicle models have the advantage of being simpler to implement, while dynamic vehicle models may give more accurate results under some circumstances.

The first vehicle model may be configured to output an expected state of the heavy-duty vehicle, where the expected state comprises any of a lateral position of a point on a vehicle unit of the heavy-duty vehicle, a lateral deviation from a desired trajectory of a point of the vehicle unit, a yaw rate, a lateral acceleration, a lateral velocity, a longitudinal position, a longitudinal acceleration, and a longitudinal velocity of the vehicle unit. Advantageously, this allows the backup control unit to determine a state of the vehicle that the planned sequence of vehicle control commands transmitted by the main vehicle control unit was intended to achieve. Also, control of states "in-between" vehicle units such as articulation angle and hitchpoint forces can be useful, e.g., to prevent jackknifing during a stop. A closed-loop controller with the vehicle model can solve multiple problems in order of importance, e.g., primarily maintain vehicle stability, and if this is achieved, then match the lateral movement as intended, and if this is also achieved then match the requested deceleration.

The first vehicle model may also be arranged to be aligned with a second vehicle model comprised in the main vehicle control unit. A second vehicle model comprised in the main vehicle control unit would generally be used to aid a trajectory planning and trajectory tracking functionality comprised in the main vehicle control unit by producing a planned vehicle state that can be expected to result from a planned vehicle control command. By aligning the first vehicle model with the second vehicle model, the desired vehicle state obtained from the planned sequence of vehicle control commands by the first vehicle model will more closely resemble the planned vehicle state obtained by the second vehicle model. Advantageously, this enables the backup control unit to more accurately determine the vehicle behavior that the planned sequence of vehicle control commands is intended to produce.

According to aspects, the first vehicle model may be aligned with the second vehicle model by exchange of a pre-determined number of model parameter values. The exchanged model parameter values may correspond to any of a mass of a vehicle unit of the vehicle, a yaw inertia of a vehicle unit, a tire stiffness, a road friction level, a longitudinal velocity, an axle load, a wheelbase, a coupling position, and a type of a vehicle unit. This has the advantage of ensuring that the first and second vehicle models use the same values for important vehicle parameters. According to other aspects, the first vehicle model may be arranged to be aligned with the second vehicle model by having one or more corresponding or identical states.

The planned sequence of vehicle control commands comprises a planned sequence of steering angles. The planned sequence of steering angles may e.g. be represented as a sequence of vectors of steering angles for one or more steered axles of the heavy-duty vehicle or as a sequence of road wheel angles.

A planned sequence of steering angles comprised in the planned sequence of vehicle control commands may for example define a trajectory for the vehicle that results in the vehicle following the road rather than leaving the road, or a trajectory that leads to the vehicle occupying a position near the edge of the road to minimize the risk of blocking or otherwise interfering with other traffic.

The desired vehicle behavior and/or measured vehicle behavior can be represented by any of a lateral position of a point on a vehicle unit of the heavy-duty vehicle, a yaw rate of a vehicle unit, a lateral acceleration of a vehicle unit, a lateral velocity of a vehicle unit, and a body sideslip of a vehicle unit. Advantageously, this allows for obtaining the deviation between the measured vehicle behavior and the desired vehicle behavior e.g., by calculating the difference between the desired and measured value of any of the abovementioned parameters.

Generally, minimum risk maneuvers are triggered when systems such as autonomous drive (AD) and advanced driver support systems (ADAS), which may be configured in the main vehicle control unit, fail to operate reliably. Accordingly, the back-up control unit may be arranged to transmit the adjusted sequence of vehicle control commands to the MSD control unit of the vehicle in response to an activation signal. The activation signal may indicate a failure in the operation of the main vehicle control unit. This has the advantage that the adjusted sequence of vehicle control commands is only transmitted to the MSD control unit when there is a need to perform a minimum risk maneuver. It is appreciated that the term MSD control unit is to be interpreted broadly herein to comprise any vehicle control unit arranged to control one or more MSDs on the vehicle.

During a minimum risk maneuver, it may be advantageous to lower the speed of the vehicle, or have it stop completely. Therefore, the adjusted sequence of vehicle control commands comprises a deceleration command configured to slow down and/or to stop the heavy-duty vehicle.

The object is also achieved at least in part by a system for controlling motion of a heavy-duty vehicle. The system comprises a backup control unit as described above, and a main vehicle control unit configured with a trajectory tracking function arranged to track a desired vehicle trajectory. The main vehicle control unit is also configured with a second vehicle model arranged to model a response by the vehicle to a requested steering command. The main vehicle control unit is arranged to generate a momentary vehicle control command and a planned sequence of vehicle control commands, and to transmit the momentary vehicle control command to a motion support device (MSD) control unit and to transmit the planned sequence of vehicle control commands to the backup control unit. The system further comprises an MSD control unit arranged to receive a vehicle control command. This system is associated with the same advantages as previously described in relation to the backup control unit.

There is also herein disclosed a computer-implemented method performed in a backup control unit for controlling motion of a heavy-duty vehicle during a minimum risk maneuver. The heavy-duty vehicle comprises a main vehicle control unit arranged to generate a planned sequence of vehicle control commands and an MSD control unit arranged to receive a vehicle control command. The method comprises configuring a first vehicle model in the backup control unit and receiving a planned sequence of vehicle control commands from the main vehicle control unit. The method also comprises mapping the planned sequence of vehicle control commands into a desired vehicle behavior using the first vehicle model, obtaining a measured vehicle behavior from a plurality of sensors, and determining an adjusted sequence of vehicle control commands based on the planned sequence of vehicle control commands and on a deviation between the desired vehicle behavior and the measured vehicle behavior. Finally, the method comprises sending the adjusted sequence of vehicle control commands to the MSD control unit.

The methods disclosed herein are associated with the same advantages as discussed above in connection to the different apparatuses. There is also disclosed herein computer programs, computer program products, and control units associated with the above-mentioned advantages.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. Further features of, and advantages with, the present invention will become apparent when studying the appended claims and the following description. The skilled person realizes that different features of the present invention may be combined to create embodiments other than those described in the following, without departing from the scope of the present invention, which is defined by the appended independent claims.

### BRIEF DESCRIPTION OF THE DRAWINGS

The present disclosure will now be described in more detail with reference to the appended drawings, where:
- Figure 1: shows an example heavy-duty vehicle;
- Figure 2: schematically illustrates a heavy-duty vehicle control system;
- Figure 3: shows an example motion support device control arrangement;
- Figure 4: shows example trajectories resulting from minimum risk maneuvers;
- Figure 5: is a flow chart illustrating methods;
- Figure 6: schematically illustrates a control unit; and
- Figure 7: shows an example computer program product.

### DETAILED DESCRIPTION

Aspects of the present disclosure will now be described more fully with reference to the accompanying drawings. The different devices and methods disclosed herein can, however, be realized in many different forms and should not be construed as being limited to the aspects set forth herein. Like numbers in the drawings refer to like elements throughout.

The terminology used herein is for describing aspects of the disclosure only and is not intended to limit the invention. As used herein, the singular forms "a", "an" and "the" are intended to include the plural forms as well, unless the context clearly indicates otherwise.

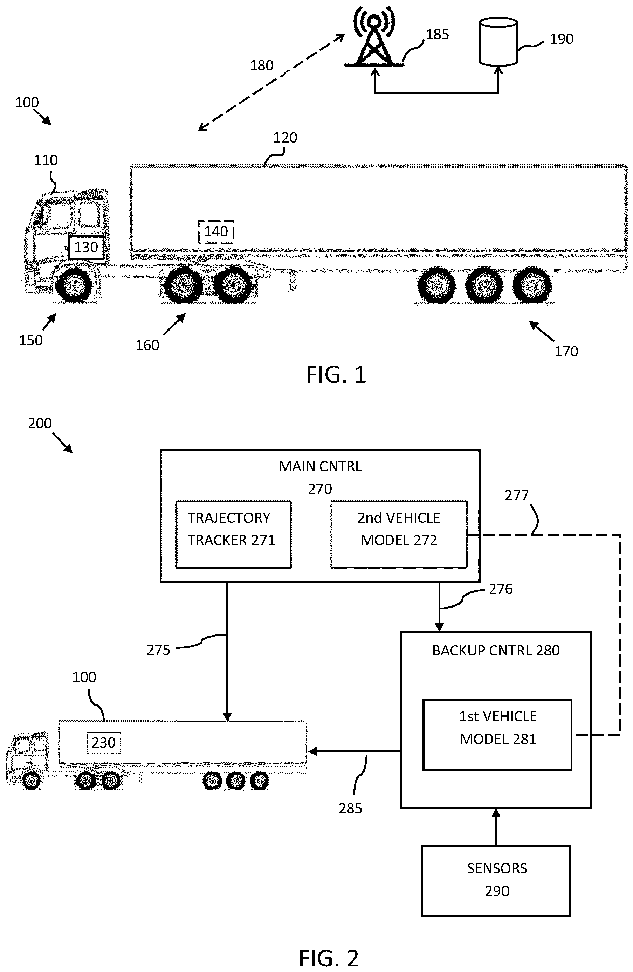

Figure 1 illustrates an example heavy-duty vehicle 100 where the herein disclosed techniques can be applied with advantage. The vehicle 100 comprises a tractor or towing vehicle 110 supported on front wheels 150 and rear wheels 160, at least some of which are driven wheels and at least some of which are steered wheels. Normally, but not necessarily, all the wheels on the tractor are braked wheels. The tractor 110 is configured to tow a first trailer unit 120 supported on trailer wheels 170 by a fifth wheel connection in a known manner. The trailer wheels are normally braked wheels but may also comprise driven wheels on one or more axles. Some trailers also comprise steered wheels in order to improve maneuverability.

It is appreciated that the herein disclosed methods and control units can be applied with advantage also in other types of heavy-duty vehicles, such as trucks with drawbar connections, construction equipment, buses, and the like. The vehicle 100 may also comprise more than two vehicle units, i.e., a dolly vehicle unit may be used to tow more than one trailer.

The tractor 110 comprises a vehicle control unit (VCU) 130 for controlling various kinds of functionality, i.a. to achieve propulsion, braking, and steering. Some trailer units 120 also comprise a VCU 140 for controlling various functions of the trailer, such as braking of trailer wheels, and sometimes also trailer wheel propulsion and steering. The VCUs 130, 140 may be centralized or distributed over several processing circuits, often referred to as electronic control units (ECU). Parts of the vehicle control functions may also be executed remotely, e.g., on a remote server 190 connected to the vehicle 100 via wireless link 180 and a wireless access network 185.

The VCU 130 on the tractor 110 (and possibly also the VCU 140 on the trailer 120) may be configured to execute vehicle control methods which are organized into different control functions. With reference to Figure 2, some functionality may be comprised in a main vehicle control unit 270. The main vehicle control unit 270 may for example comprise an autonomous drive (AD) or advanced driver-assistance system (ADAS) control function. The main vehicle control unit 270 generates a vehicle control command 275 which is transmitted to one or more MSD control units 230 of the vehicle 100 in order to operate the vehicle. These MSD control units will be discussed in more detail below, but normally comprise at least control of steering, propulsion, and braking.

Other functionality may be comprised in a backup control unit 280. In particular, the backup control unit 280 may be arranged to control the vehicle under circumstances where the AD and/or ADAS functionality of the main vehicle control unit 270 is unable to operate. Such circumstances may occur e.g., due to errors within the control unit, power outage, or due to malfunction in sensors such as radar, lidar and cameras which provide the AD and/or ADAS functionality with information about the surrounding environment. To handle such situations, AD and/or ADAS functionality is often arranged to determine and continually update a planned minimum risk maneuver that can be executed by the backup control unit 280 to bring the vehicle to a safe state if the AD and/or ADAS functionality stops working. The minimum risk maneuver may be transmitted to the backup control unit 280 in the form of a planned trajectory, or in the form of a sequence of vehicle control commands. One example of a simple minimum risk maneuver is that the vehicle maintains the planned curvature but slows down in a controlled manner in order to bring the vehicle to a halt. Other, more advanced, minimum risk maneuvers are of course also possible. Generation of minimum risk maneuvers is generally known and will not be discussed in more detail herein.

Transmitting the minimum risk maneuver from the main vehicle control unit 270 to the backup control unit 280 in the form of a sequence of vehicle control commands such as a time sequence of steering angles and deceleration requests, has the advantage of simplifying the implementation of the backup control unit 280, as it removes the need for a trajectory tracking functionality in the backup control unit 280. The back-up control unit may, in a low complexity implementation, be realized as a data buffer which is arranged to feed out the sequence from memory in case of some fault condition. However, without continuous feedback regarding the state of the vehicle 100, there is a risk that the planned sequence of vehicle control commands will not result in the required minimum risk maneuver. As an example, unforeseen steering errors can occur due to shifts in side wind or road banking or result from shifts in the steering system. For instance, relay linkages within the steering system are likely to move as the suspension of the vehicle travels up and down or rolls. Errors may also be incurred from modelling errors in the main control unit 270. Over the course of a minimum risk maneuver, such errors may accumulate and potentially increase the risk of the maneuver. This problem can be mitigated if the backup control unit 280 is able to adjust the sequence of vehicle control commands to reflect a present state of the vehicle 100.

To improve the execution of the minimum risk maneuver, the backup control unit 280 may comprise functionality for actively controlling motion of the heavy-duty vehicle 100 during the minimum risk maneuver. The backup control unit 280 is arranged to receive data indicative of a planned sequence of vehicle control commands 276 from a main vehicle control unit 270. It also comprises a first vehicle model 281 configured to map the planned sequence of vehicle control commands 276 into a desired vehicle behavior. Furthermore, the backup control unit 280 is arranged to obtain a measured vehicle behavior from one or more vehicle sensors 290 and to determine an adjusted sequence of vehicle control commands 285 based on the planned sequence of vehicle control commands 276 and on a deviation between the desired vehicle behavior and the measured vehicle behavior. The backup control unit 280 is also arranged to transmit the adjusted sequence of vehicle control commands 285 to a motion support device, MSD, control unit 230 of the vehicle 100.

The vehicle sensors 290 may be the same sensors as used by the main vehicle control unit, or at least in part another set of sensors. By adding redundancy in the vehicle sensor systems, such that the backup control unit has access to sensor information even if the main sensor systems on the vehicle fail, a more robust system is provided.

The first vehicle model 281 is arranged to model vehicle behavior in response to a given set of vehicle control commands, such as a sequence of steering angles or deceleration / acceleration commands. The first vehicle model 281 may be a static vehicle model, such as a yaw gain model, or a dynamic vehicle model, such as a linear one-track model. Generally, a vehicle model is classified as dynamic if its behavior at a given instant depends not only on the present inputs but also on the past inputs. A dynamic model is said to have memory or inertia. A dynamic system is most often described by one or several differential equations, one or several difference equations, one or several algebraic equations with a time lag. In a static vehicle model, the state and the output at a given instant depends only on the input at this instant. The relation between the input and the output is then given by one or several algebraic equations. Both static and dynamic vehicle models are previously known and will therefore not be discussed in more detail herein.

The first vehicle model 281 is thus arranged to model the vehicle behavior in response to a control command in the planned sequence of vehicle control commands 276, which results in data representing an expected state of the vehicle 100 if the vehicle control command was executed. The first vehicle model 281 may be configured to output this expected state of the heavy-duty vehicle 100. The expected state may comprise any of a lateral position of a point on a vehicle unit 110, 120 of the heavy-duty vehicle 100, a lateral deviation from a desired trajectory of a point of the vehicle unit 110, 120, a yaw rate, a lateral acceleration, a lateral velocity, a longitudinal position, a longitudinal acceleration, and a longitudinal velocity of the vehicle unit 110, 120.

The expected state of the vehicle 100 output by the first vehicle model in response to the planned sequence of vehicle control commands 276 corresponds to a desired vehicle behavior during a planned minimum risk maneuver. This desired vehicle behavior may then be compared to a measured vehicle behavior obtained from at least one sensor 290. The desired vehicle behavior and/or the measured vehicle behavior may be represented by any of a lateral position of a point on a vehicle unit 110, 120 of the heavy-duty vehicle 100, a yaw rate of a vehicle unit 110, 120, a lateral acceleration of a vehicle unit 110, 120, a lateral velocity of a vehicle unit 110, 120, and a body sideslip of a vehicle unit 110, 120.

The at least one sensor 290 may for example be a speed sensor, a steering angle sensor, or an accelerometer arranged to measure lateral and/or longitudinal acceleration. In particular, the steering angle of a heavy-duty vehicle steering system may be measured inside the electronic power steering motor and/or by a separate steering angle sensor.

Comparing the desired and measured vehicle behaviors may comprise calculating a difference between the desired and measured values of e.g., the yaw rate, body sideslip, lateral or longitudinal velocity, lateral or longitudinal acceleration, or lateral position of the vehicle 100.

A system 200 for controlling motion of a heavy-duty vehicle 100, as shown in Figure 2, comprises a backup control unit 280 as described above and a main vehicle control unit 270 configured with a trajectory planning and/or trajectory tracking function 271 arranged to track a desired vehicle trajectory, and a second vehicle model 272 arranged to model a response by the vehicle 100 to a requested steering command. The main vehicle control unit 270 is arranged to generate a momentary vehicle control command 275 and a planned sequence of vehicle control commands 276. The main vehicle control unit 270 is also be arranged to transmit the momentary steering command to a motion support device (MSD) control unit 230 and to transmit the planned sequence of vehicle control commands 276 to the backup control unit 280. The control system 200 further comprises an MSD control unit 230 arranged to receive a vehicle control command. The MSD control unit 230 may comprise a central MSD control function or several separate MSD control units. The MSD control unit 230 then controls the physical actuators, which comprises a power steering arrangement, and optionally also braking and propulsion actuators.

AD and ADAS systems and methods normally base vehicle control on some form of path following or trajectory tracking algorithm. The control system 200 first determines a desired path to be followed by the vehicle, e.g., based on a current transport mission, together with map data indicating possible routes to take in order to navigate the vehicle from one location to another. Path following is the process concerned with how to determine vehicle speed and steering at each instant of time for the vehicle to adhere to a certain target path to be followed. There are many different types of path following algorithms available in the literature, each associated with its respective advantages and disadvantages.

Pure pursuit is a well-known path following algorithm which can be implemented with relatively low complexity. It is described, e.g., in "Implementation of the pure pursuit path tracking algorithm", by R.C. Coulter, Carnegie-Mellon University, Pittsburgh PA Robotics INST, 1992. The algorithm computes a set of vehicle controls, comprising steering angle, by which the vehicle moves from its current position towards a point at a predetermined "preview" distance away along the path to be followed. The pure pursuit methods cause the vehicle to "chase" a point along the path separated from the vehicle by the preview distance, hence the name.

Vector field guidance is another path following algorithm which instead bases the vehicle control on a vector field, which vector field is also determined based on a preview distance or look-a-head parameter. Vector field guidance methods were, e.g., discussed by Gordon, Best and Dixon in "An Automated Driver Based on Convergent Vector Fields", Proc. Inst. Mech. Eng. Part D, vol. 216, pp 329-347, 2002.

During both trajectory planning and trajectory tracking, it is helpful to be able to predict the response of the vehicle to a given control input, such as an applied steering wheel angle, in order to more closely follow a desired vehicle trajectory. Thus, the trajectory function 271 aided by the second vehicle model 272 generates a momentary steering request 275, which is transmitted to the MSD control unit 230 under normal operation, and a planned sequence of vehicle control commands 276 representing a minimum risk maneuver that is transmitted to the backup control unit 280. The planned sequence of vehicle control commands 276 then corresponds to a planned vehicle state predicted by the second vehicle model 272. The second vehicle model 272 may be a static vehicle model, such as a yaw gain model or a dynamic vehicle model, such as a linear one-track model.

The first vehicle model 281 may be arranged to be aligned 277 with the second vehicle model 272 comprised in the main vehicle control unit 270. This has the advantage that the expected vehicle state and desired vehicle behavior produced by the first vehicle 281 will more closely correspond to the planned vehicle state generated by the second vehicle model 272. To align the different models, the two models may be arranged to perform a handshake procedure where they exchange and negotiate model parameters related to the vehicle, and potentially also a vehicle state space.

For instance, the main vehicle control unit 270 may be in possession of vehicle data such as gross cargo weight and other dynamic properties of the vehicle 100, which it then shares with the first vehicle model 281 in order to align the two models with each other. This alignment can be performed as the vehicle is powered up and can also be periodically updated. For instance, the first and second vehicle models may be continuously updated with vehicle data such as estimated tire wear, the state of the suspension of the vehicle, and the different capabilities of the motion support devices on the vehicle.

Thus, the first vehicle model 281 may be arranged to be aligned with the second vehicle model 272 by exchange of a pre-determined number of model parameter values. The exchanged model parameter values may correspond to any of a mass of a vehicle unit 110, 120 of the vehicle 100, a yaw inertia of a vehicle unit 110, 120, a tire stiffness, a road friction level, a longitudinal velocity, an axle load, a wheelbase, a coupling position, and a type of a vehicle unit 110, 120. Optionally, the first vehicle model 281 may also be arranged to be aligned with the second vehicle model 272 by having one or more corresponding or identical states.

The control commands in the planned sequence of control commands 276 are arranged to be carried out in sequence in order to cause the vehicle to execute a desired minimum risk maneuver. This may require the control commands to be executed at specific times relative to each other, so that each control command is separated in time from the previous control command by a time interval.

According to some aspects, the time interval may be a pre-determined fixed time interval. Data indicating the time interval may be available to the main vehicle control unit 270 and the backup control unit 280. In this case, the backup control unit 280 may be arranged to transmit the adjusted sequence of vehicle control commands 285 to the MSD control unit 230 one at a time, at intervals corresponding or even equal to the pre-determined time interval. The time interval may also be available to the MSD control unit 230, in which case the MSD control unit 230 may be arranged to receive a sequence of multiple commands at once and execute them at intervals corresponding to the pre-determined time interval.

According to other aspects, the time interval may be a variable time interval that is set in dependence of a state of the vehicle in a pre-determined manner. A state of the vehicle could here be a vehicle speed or a road to wheel angle of at least one steered axle. The variable time interval may for example be determined by the main vehicle control unit 270 and transmitted to the backup control unit 280 along with the planned sequence of vehicle control commands 276. The backup control unit 280 may then transmit the adjusted sequence of vehicle control commands to the MSD control unit 230 one at a time, at intervals corresponding to the variable time interval. Alternately, the MSD control unit 230 may be arranged to receive the adjusted sequence of vehicle control commands and data indicating the variable time interval, and to execute the sequence to vehicle control commands at intervals equal to the variable time interval. Optionally, the backup control unit 280 may be arranged to determine an adjusted variable time interval in dependence of the deviation between the desired and measured vehicle behavior.

The planned sequence of vehicle control commands 276 may comprise a planned sequence of steering angles. Herein, if nothing else is explicitly stated, a steering angle is defined as an average road to wheel angle of a steered axle, i.e., accounting for road wheel angle differences of the two steered wheels of a steered axle due to Ackermann geometries and the like. It is furthermore appreciated that wheels may be individually steerable in some vehicle designs, i.e., the two wheels of a steered axle may be possible to steer independently of each other and may also comprise independently actuated wheel-end electric motors.

According to aspects, the planned sequence of steering angles may be a sequence of vectors of steering angles for one or more steered axles of the heavy-duty vehicle 100. According to other aspects, the planned sequence of steering angles may correspond to a sequence of road wheel angles.

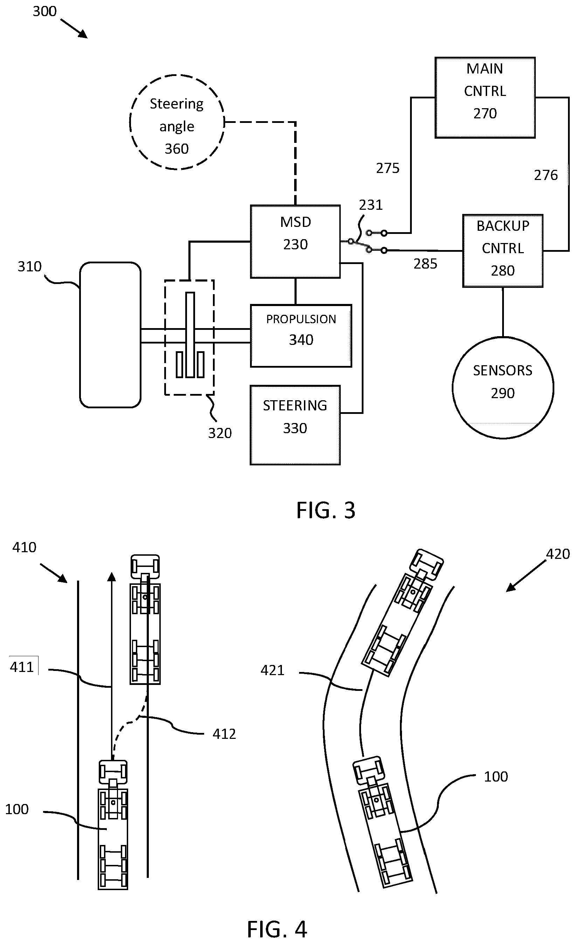

Fig 3 schematically illustrates functionally 300 for controlling an example wheel 310 on the vehicle 100 by some example MSDs here comprising a friction brake 320, a propulsion device 340 and a steering arrangement 330. The friction brake 320, which may for example be a disc brake or a drum brake, and the propulsion device 340 are examples of torque generating devices, which may be controlled by one or more MSD control units 230. An MSD control unit 230 may be arranged to control one or more actuators. For instance, it is not uncommon that an MSD control unit 230 is arranged to control both wheels on an axle.

The functionality 300 for instance comprises control of steering angle δ via the power steering arrangement 330. The MSD control unit 230 receives information related to the current steering angle, either directly from an optional steering angle sensor 360 or indirectly via a model of steering angle as function of steering angle control input generated by the MSD control unit 230.

During operation of the vehicle, both the main vehicle control unit 270 and the backup control unit 280 may generate vehicle control commands that can be sent to the MSD control unit 230. According to some aspects, the system may be arranged such that either the main vehicle control unit 270 or the backup control unit 280 may send a vehicle control command, but both control units cannot send a vehicle control command simultaneously. Figure 3 schematically illustrates this functionality as a switch 231.

In this case, the back-up control unit 280 may be arranged to only transmit the adjusted sequence of vehicle control commands 285 to the MSD control unit 230 of the vehicle in response to an activation signal. The activation signal may indicate a failure in the operation of the main vehicle control unit 270.

As an example, the switch 231 may be arranged so that the main vehicle control unit 270 can send commands, such as the momentary vehicle control command 275 mentioned above, to the MSD control unit 230 under normal operation. The switch 231 may then be arranged to shift so that the backup control unit 280 can send commands to the MSD control unit in response to an activation signal. The activation signal may be sent by the main vehicle control unit 270 when there is a failure in the operation of the main vehicle control unit 270 that necessitates the execution of a minimum risk maneuver. The activation signal may also be sent by the backup control unit 280, e.g., if the main vehicle control unit stops transmitting the planned sequence of vehicle control commands 276 or transmits a fault signal.

According to other aspects, both the main vehicle control unit 270 and the backup control unit 280 may send vehicle control commands to the MSD control unit 230. In this case, the MSD control unit 230 may be arranged to select which vehicle control command to execute. The MSD control unit 230 may for example be arranged to also receive a fault signal indicating a failure in the operation of the main vehicle control unit 270, and to select a vehicle control command to execute in dependence of the fault signal.

The MSD control unit 230 may also be arranged to detect an error in the received vehicle control commands, e.g., if the main vehicle control unit 270 transmits the same vehicle control commands multiple times or if the difference between vehicle control commands received from the main vehicle control unit 270 and from the backup control unit 280 exceeds an error threshold. In this case, the MSD control unit 230 may select a vehicle control command to execute in dependence of the detected error. I guess you can detect very severe errors (e.g., the steering value from the main unit jumps to maximum), as main and backup should be consistent at any time, they're just allowed to deviate looking ahead. For instance, if the main controller steering input saturates, or if the main controller input risks vehicle stability, then the vehicle control commands from the backup unit can be selected instead of the control input from the main vehicle controller.

You could also look at other stability measures, like if you go 80 kph, steering angles above 10 degrees at the wheel (just an example) are dangerous.

Figure 4 shows example trajectories resulting from minimum risk maneuvers. In scenario 410, the vehicle 100 follows a straight road according to a trajectory 411. If a minimum risk maneuver is required, the vehicle may follow the trajectory 412 according to which the vehicle leaves the middle of the road and takes up a position closer to the edge of the road.

In scenario 420, the vehicle 100 follows a curved road according to a trajectory 421. Here, a minimum risk maneuver may comprise continuing along the trajectory 421 in order to prevent the vehicle from leaving the road.

In both scenario 410 and 420, the vehicle may also decelerate as the minimum risk maneuver is performed, eventually coming to a stop. In general, the adjusted sequence of vehicle control commands 285 may comprise a deceleration command configured to slow down and/or to stop the heavy-duty vehicle 100.

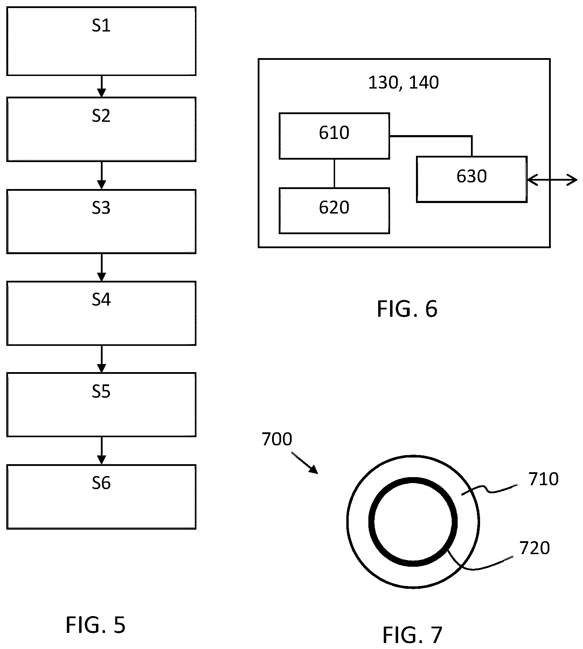

Figure 5 illustrates a computer-implemented method performed in a backup control unit 280 for controlling motion of a heavy-duty vehicle 100 during a minimum risk maneuver. The heavy-duty vehicle may comprise a main vehicle control unit 270 arranged to generate a planned sequence of vehicle control commands 276. The heavy-duty vehicle may also comprise an MSD control unit 230 arranged to receive a vehicle control command 275, 285. The method comprises configuring S1 a first vehicle model 281 in the backup control unit 280 and receiving S2 a planned sequence of vehicle control commands 276 from the main vehicle control unit 270. The method further comprises mapping S3 the planned sequence of vehicle control commands 276 into a desired vehicle behavior using the first vehicle model 281, obtaining S4 a measured vehicle behavior from a plurality of sensors 290 and determining S5 an adjusted sequence of vehicle control commands 285 based on the planned sequence of vehicle control commands 276 and on a deviation between the desired vehicle behavior and the measured vehicle behavior. Lastly, the method also comprises sending S6 the adjusted sequence of vehicle control commands 285 to the MSD control unit 230.

Furthermore, with reference to Figures 6 and 7, there is herein disclosed a computer program 720 comprising program code means for performing the method described above, when said program is run on a computer or on processing circuitry 610 of a control unit 130, 140. Also, there is disclosed a computer readable medium 710 carrying a computer program 720 comprising program code means for performing the steps of the previously described method when said program product is run on a computer or on processing circuitry 610 of a control unit 130, 140.

Figure 6 schematically illustrates, in terms of a number of functional units, the components of a control unit such as any of the VCUs 130, 140. The control unit may implement one or more of the above discussed functions of the main vehicle control unit 270, backup control unit 280 and/or the MSD control unit 230, according to embodiments of the discussions herein. The control unit is configured to execute at least some of the functions discussed above for control of a heavy-duty vehicle 100. Processing circuitry 610 is provided using any combination of one or more of a suitable central processing unit CPU, multiprocessor, microcontroller, digital signal processor DSP, etc., capable of executing software instructions stored in a computer program product, e.g., in the form of a storage medium 620. The processing circuitry 610 may further be provided as at least one application specific integrated circuit ASIC, or field programmable gate array FPGA.

Particularly, the processing circuitry 610 is configured to cause a control unit to perform a set of operations, or steps, such as the methods discussed in connection to Figure 5. For example, the storage medium 620 may store the set of operations, and the processing circuitry 610 may be configured to retrieve the set of operations from the storage medium 620 to cause the control unit 130, 140 to perform the set of operations. The set of operations may be provided as a set of executable instructions. Thus, the processing circuitry 610 is thereby arranged to execute methods as herein disclosed.

The storage medium 620 may also comprise persistent storage, which, for example, can be any single one or combination of magnetic memory, optical memory, solid state memory or even remotely mounted memory.

The control unit 130, 140 may further comprise an interface 630 for communications with at least one external device. As such the interface 630 may comprise one or more transmitters and receivers, comprising analogue and digital components and a suitable number of ports for wireline or wireless communication.

The processing circuitry 610 controls the general operation of the control unit 130, 140, e.g., by sending data and control signals to the interface 630 and the storage medium 620, by receiving data and reports from the interface 630, and by retrieving data and instructions from the storage medium 620. Other components, as well as the related functionality, of the control node are omitted in order not to obscure the concepts presented herein.

Figure 7 illustrates a computer readable medium 710 carrying a computer program comprising program code means 720 for performing the methods illustrated in Figure 5, when said program product is run on a computer. The computer readable medium and the code means may together form a computer program product 700.

## Claims

1. A backup control unit (280) for controlling motion of a heavy-duty vehicle (100) during a minimum risk maneuver,
wherein the backup control unit (280) is arranged to receive data indicative of a planned sequence of vehicle control commands (276) from a main vehicle control unit (270), wherein the planned sequence of vehicle control commands is representing the minimum risk maneuver, and wherein the planned sequence of vehicle control commands comprises a planned sequence of steering angles,
the backup control unit (280) comprising a first vehicle model (281) configured to map the planned sequence of vehicle control commands (276) into a desired vehicle behavior,
the backup control unit (280) further being arranged to obtain a measured vehicle behavior from one or more vehicle sensors (290),
wherein the back-up control unit (280) is arranged to determine an adjusted sequence of vehicle control commands (285) based on the planned sequence of vehicle control commands (276) and on a deviation between the desired vehicle behavior and the measured vehicle behavior, wherein the adjusted sequence of vehicle control commands further comprises a deceleration command configured to slow down and/or to stop the heavy-duty vehicle, and
to transmit the adjusted sequence of vehicle control commands (285) to a motion support device, MSD, control unit (230) of the vehicle (100).

2. The backup control unit (280) according to claim 1, wherein the first vehicle model (281) is a static vehicle model, such as a yaw gain model.

3. The backup control unit (280) according to claim 1, wherein the first vehicle model (281) is a dynamic vehicle model, such as a linear one-track model.

4. The backup control unit (280) according to any previous claim, wherein the first vehicle model (281) is configured to output an expected state of the heavy-duty vehicle (100), where the expected state comprises any of a lateral position of a point on a vehicle unit (110, 120) of the heavy-duty vehicle (100), a lateral deviation from a desired trajectory of a point of the vehicle unit (110, 120), a yaw rate, a lateral acceleration, a lateral velocity, a longitudinal position, a longitudinal acceleration, and a longitudinal velocity of the vehicle unit (110, 120).

5. The backup control unit (280) according to any previous claim, wherein the first vehicle model (281) is arranged to be aligned with a second vehicle model (272) comprised in the main vehicle control unit (270).

6. The backup control unit (280) according to claim 5, wherein the first vehicle model (281) is arranged to be aligned with the second vehicle model (272) by exchange of a pre-determined number of model parameter values.

7. The backup control unit (280) according to claim 6, wherein the exchanged model parameter values correspond to any of a mass of a vehicle unit (110, 120) of the vehicle (100), a yaw inertia of a vehicle unit (110, 120), a tire stiffness, a road friction level, a longitudinal velocity, an axle load, a wheelbase, a coupling position, and a type of a vehicle unit (110, 120).

8. The backup control unit (280) according to any of claims 5 to 7, wherein the first vehicle model (281) is arranged to be aligned with the second vehicle model (272) by having one or more corresponding or identical states.

9. The backup control unit (280) according to claim 1, wherein the planned sequence of steering angles is a sequence of vectors of steering angles for one or more steered axles of the heavy-duty vehicle (100).

10. The backup control unit (280) according to claim 1, wherein the planned sequence of steering angles corresponds to a sequence of road wheel angles.

11. The backup control unit (280) according to any previous claim, wherein the desired vehicle behavior and/or measured vehicle behavior is represented by any of a lateral position of a point on a vehicle unit (110, 120) of the heavy-duty vehicle (100), a yaw rate of a vehicle unit (110, 120), a lateral acceleration of a vehicle unit (110, 120), a lateral velocity of a vehicle unit (110, 120), and a body sideslip of a vehicle unit (110, 120).

12. The backup control unit (280) according to any previous claim, wherein the back-up control unit (280) is arranged to transmit the adjusted sequence of vehicle control commands (285) to the MSD control unit (230) of the vehicle in response to an activation signal.

13. The backup control unit (280) according to claim 12, wherein the activation signal indicates a failure in the operation of the main vehicle control unit (270).

14. A system (200) for controlling motion of a heavy-duty vehicle (100),
the system (200) comprising a backup control unit (280) according to any previous claim,
the system (200) also comprising a main vehicle control unit (270) configured with a trajectory tracking function (271) arranged to track a desired vehicle trajectory, and a second vehicle model (272) arranged to model a response by the vehicle (100) to a requested steering command, where the main vehicle control unit (270) is arranged to generate a momentary vehicle control command (275) and a planned sequence of vehicle control commands (276),
the main vehicle control unit (270) also being arranged to transmit the momentary steering command to a motion support device, MSD, control unit (230) and to transmit the planned sequence of vehicle control commands (276) to the backup control unit (280),
the system (200) further comprising an MSD control unit (230) arranged to receive a vehicle control command.

15. A computer-implemented method performed in a backup control unit (280) for controlling motion of a heavy-duty vehicle (100) during a minimum risk maneuver, the heavy-duty vehicle comprising a main vehicle control unit (270) arranged to generate a planned sequence of vehicle control commands (276), the heavy-duty vehicle also comprising an MSD control unit (230) arranged to receive a vehicle control command (275, 285), the method comprising;
configuring (S1) a first vehicle model (281) in the backup control unit (280);
receiving (S2) a planned sequence of vehicle control commands (276) from the main vehicle control unit (270) wherein the planned sequence of vehicle control commands is representing the minimum risk maneuver, and wherein the planned sequence of vehicle control commands comprises a planned sequence of steering angles;
mapping (S3), the planned sequence of vehicle control commands (276) into a desired vehicle behavior using the first vehicle model (281);
obtaining (S4) a measured vehicle behavior from a plurality of sensors (290);
determining (S5) an adjusted sequence of vehicle control commands (285) based on the planned sequence of vehicle control commands (276) and on a deviation between the desired vehicle behavior and the measured vehicle behavior, the adjusted sequence of vehicle control commands further comprises a deceleration command configured to slow down and/or to stop the heavy-duty vehicle;;
sending (S6) the adjusted sequence of vehicle control commands (285) to the MSD control unit (230).

16. A computer program (720) comprising program code means for performing the steps of claim 17, when said program is run on a computer or on processing circuitry (610) of a control unit (130, 140).

17. A computer readable medium (710) carrying a computer program (720) comprising program code means for performing the steps of claim 17 when said program product is run on a computer or on processing circuitry (610) of a control unit (130, 140).

## Patentansprüche

1. Sicherungssteuerungseinheit (280) zum Steuern einer Bewegung eines Schwerlastfahrzeugs (100) während eines Manövers mit minimalem Risiko,
wobei die Sicherungssteuerungseinheit (280) dazu angeordnet ist, Daten, die eine geplante Sequenz von Fahrzeugsteuerungsbefehlen (276) angeben, von einer Hauptfahrzeugsteuerungseinheit (270) zu empfangen, wobei die geplante Sequenz von Fahrzeugsteuerungsbefehlen das Manöver mit minimalem Risiko darstellt und wobei die geplante Sequenz von Fahrzeugsteuerungsbefehlen eine geplante Sequenz von Lenkwinkeln umfasst,
wobei die Sicherungssteuerungseinheit (280) ein erstes Fahrzeugmodell (281) umfasst, das dazu konfiguriert ist, die geplante Sequenz von Fahrzeugsteuerungsbefehlen (276) in ein erwünschtes Fahrzeugverhalten abzubilden,
wobei die Sicherungssteuerungseinheit (280) ferner dazu angeordnet ist, ein gemessenes Fahrzeugverhalten von einem oder mehreren Fahrzeugsensoren (290) zu erlangen,
wobei die Sicherungssteuerungseinheit (280) dazu angeordnet ist, eine angepasste Sequenz von Fahrzeugsteuerungsbefehlen (285) basierend auf der geplanten Sequenz von Fahrzeugsteuerungsbefehlen (276) und auf einer Abweichung zwischen dem erwünschten Fahrzeugverhalten und dem gemessenen Fahrzeugverhalten zu bestimmen, wobei die angepasste Sequenz von Fahrzeugsteuerungsbefehlen ferner einen Abbremsungsbefehl umfasst, der dazu konfiguriert ist, das Schwerlastfahrzeug zu verlangsamen und/oder anzuhalten, und
die angepasste Sequenz von Fahrzeugsteuerungsbefehlen (285) an eine Bewegungsunterstützungseinrichtungssteuerungseinheit, MSD-Steuerungseinheit, (230) des Fahrzeugs (100) zu übertragen.

2. Sicherungssteuerungseinheit (280) nach Anspruch 1, wobei das erste Fahrzeugmodell (281) ein statisches Fahrzeugmodell, wie etwa ein Gierverstärkungsmodell, ist.

3. Sicherungssteuerungseinheit (280) nach Anspruch 1, wobei das erste Fahrzeugmodell (281) ein dynamisches Fahrzeugmodell, wie etwa ein lineares Einspurmodell, ist.

4. Sicherungssteuerungseinheit (280) nach einem der vorhergehenden Ansprüche, wobei das erste Fahrzeugmodell (281) dazu konfiguriert ist, einen erwarteten Zustand des Schwerlastfahrzeugs (100) auszugeben, wobei der erwartete Zustand eine beliebige einer seitlichen Position eines Punktes auf einer Fahrzeugeinheit (110, 120) des Schwerlastfahrzeugs (100), einer seitlichen Abweichung von einer erwünschten Bahn eines Punktes der Fahrzeugeinheit (110, 120), einer Gierrate, einer seitlichen Beschleunigung, einer seitlichen Geschwindigkeit, einer Längsposition, einer Längsbeschleunigung und einer Längsgeschwindigkeit der Fahrzeugeinheit (110, 120) umfasst.

5. Sicherungssteuerungseinheit (280) nach einem der vorhergehenden Ansprüche, wobei das erste Fahrzeugmodell (281) dazu angeordnet ist, mit einem zweiten Fahrzeugmodell (272) ausgerichtet zu werden, das in der Hauptfahrzeugsteuerungseinheit (270) umfasst ist.

6. Sicherungssteuerungseinheit (280) nach Anspruch 5, wobei das erste Fahrzeugmodell (281) dazu angeordnet ist, durch einen Austausch einer vorbestimmten Anzahl an Modellparameterwerten mit dem zweiten Fahrzeugmodell (272) ausgerichtet zu werden.

7. Sicherungssteuerungseinheit (280) nach Anspruch 6, wobei die ausgetauschten Modellparameterwerte einem beliebigen einer Masse einer Fahrzeugeinheit (110, 120) des Fahrzeugs (100), einer Gierträgheit einer Fahrzeugeinheit (110, 120), einer Reifensteifigkeit, einer Straßenreibungsebene, einer Längsgeschwindigkeit, einer Achslast, eines Radstands, einer Kopplungsposition und einer Art einer Fahrzeugeinheit (110, 120) entsprechen.

8. Sicherungssteuerungseinheit (280) nach einem der Ansprüche 5 bis 7, wobei das erste Fahrzeugmodell (281) dazu angeordnet ist, durch Aufweisen eines oder mehrerer entsprechender oder identischer Zustände mit dem zweiten Fahrzeugmodell (272) ausgerichtet zu werden.

9. Sicherungssteuerungseinheit (280) nach Anspruch 1, wobei die geplante Sequenz von Lenkwinkeln eine Sequenz von Vektoren von Lenkwinkeln für eine oder mehrere gelenkte Achsen des Schwerlastfahrzeugs (100) ist.

10. Sicherungssteuerungseinheit (280) nach Anspruch 1, wobei die geplante Sequenz von Lenkwinkeln einer Sequenz von Laufradwinkeln entspricht.

11. Sicherungssteuerungseinheit (280) nach einem der vorhergehenden Ansprüche, wobei das erwünschte Fahrzeugverhalten und/oder gemessene Fahrzeugverhalten durch ein beliebiges einer seitlichen Position eines Punktes auf einer Fahrzeugeinheit (110, 120) des Schwerlastfahrzeugs (100), einer Gierrate einer Fahrzeugeinheit (110, 120), einer seitlichen Beschleunigung einer Fahrzeugeinheit (110, 120), einer seitlichen Geschwindigkeit einer Fahrzeugeinheit (110, 120) und eines Schwimmens einer Fahrzeugeinheit (110, 120) dargestellt wird.

12. Sicherungssteuerungseinheit (280) nach einem der vorhergehenden Ansprüche, wobei die Sicherungssteuerungseinheit (280) dazu angeordnet ist, die angepasste Sequenz von Fahrzeugsteuerungsbefehlen (285) als Reaktion auf ein Aktivierungssignal an die MSD-Steuerungseinheit (230) des Fahrzeugs zu übertragen.

13. Sicherungssteuerungseinheit (280) nach Anspruch 12, wobei das Aktivierungssignal einen Ausfall im Betrieb der Hauptfahrzeugsteuerungseinheit (270) angibt.

14. System (200) zum Steuern einer Bewegung eines Schwerlastfahrzeugs (100),
wobei das System (200) eine Sicherungssteuerungseinheit (280) nach einem der vorhergehenden Ansprüche umfasst,
wobei das System (200) ebenfalls eine Hauptfahrzeugsteuerungseinheit (270) umfasst, die mit einer Bahnverfolgungsfunktion (271), die dazu angeordnet ist, eine erwünschte Fahrzeugbahn zu verfolgen, und einem zweiten Fahrzeugmodell (272), das dazu angeordnet ist, eine Reaktion durch das Fahrzeug (100) auf einen angeforderten Lenkbefehl zu modellieren, konfiguriert ist, wobei die Hauptfahrzeugsteuerungseinheit (270) dazu angeordnet ist, einen momentanen Fahrzeugsteuerungsbefehl (275) und eine geplante Sequenz von Fahrzeugsteuerungsbefehlen (276) zu erzeugen,
wobei die Hauptfahrzeugsteuerungseinheit (270) ebenfalls dazu angeordnet ist, den momentanen Lenkbefehl an eine Bewegungsunterstützungseinrichtungssteuerungseinheit, MSD-Steuerungseinheit, (230) zu übertragen und die geplante Sequenz von Fahrzeugsteuerungsbefehlen (276) an die Sicherungssteuerungseinheit (280) zu übertragen,
wobei das System (200) ferner eine MSD-Steuerungseinheit (230) umfasst, die dazu angeordnet ist, einen Fahrzeugsteuerungsbefehl zu empfangen.

15. Computerimplementiertes Verfahren, das in einer Sicherungssteuerungseinheit (280) durchgeführt wird, zum Steuern einer Bewegung eines Schwerlastfahrzeugs (100) während eines Manövers mit minimalem Risiko, wobei das Schwerlastfahrzeug eine Hauptfahrzeugsteuerungseinheit (270) umfasst, die dazu angeordnet ist, eine geplante Sequenz von Fahrzeugsteuerungsbefehlen (276) zu erzeugen, wobei das Schwerlastfahrzeug ebenfalls eine MSD-Steuerungseinheit (230) umfasst, die dazu angeordnet ist, einen Fahrzeugsteuerungsbefehl (275, 285) zu empfangen, wobei das Verfahren Folgendes umfasst; Konfigurieren (S1) eines ersten Fahrzeugmodells (281) in der Sicherungssteuerungseinheit (280);
Empfangen (S2) einer geplanten Sequenz von Fahrzeugsteuerungsbefehlen (276) von der Hauptfahrzeugsteuerungseinheit (270), wobei die geplante Sequenz von Fahrzeugsteuerungsbefehlen das Manöver mit minimalem Risiko darstellt und wobei die geplante Sequenz von Fahrzeugsteuerungsbefehlen eine geplante Sequenz von Lenkwinkeln umfasst;
Abbilden (S3) der geplanten Sequenz von Fahrzeugsteuerungsbefehlen (276) in ein erwünschtes Fahrzeugverhalten unter Verwendung des ersten Fahrzeugmodells (281);
Erlangen (S4) eines gemessenen Fahrzeugverhaltens von einer Vielzahl von Sensoren (290);
Bestimmen (S5) einer angepassten Sequenz von Fahrzeugsteuerungsbefehlen (285) basierend auf der geplanten Sequenz von Fahrzeugsteuerungsbefehlen (276) und auf einer Abweichung zwischen dem erwünschten Fahrzeugverhalten und dem gemessenen Fahrzeugverhalten, wobei die angepasste Sequenz von Fahrzeugsteuerungsbefehlen ferner einen Abbremsungsbefehl umfasst, der dazu konfiguriert ist, das Schwerlastfahrzeug zu verlangsamen und/oder anzuhalten;;
Senden (S6) der angepassten Sequenz von Fahrzeugsteuerungsbefehlen (285) an die MSD-Steuerungseinheit (230) .

16. Computerprogramm (720), umfassend Programmcodemittel zum Durchführen der Schritte nach Anspruch 17, wenn das Programm auf einem Computer oder auf einer Verarbeitungsschaltung (610) einer Steuerungseinheit (130, 140) ausgeführt wird.

17. Computerlesbares Medium (710), enthaltend ein Computerprogramm (720), umfassend Programmcodemittel zum Durchführen der Schritte nach Anspruch 17, wenn das Programmprodukt auf einem Computer oder auf einer Verarbeitungsschaltung (610) einer Steuerungseinheit (130, 140) ausgeführt wird.

## Revendications

1. Unité de commande de secours (280) pour commander le mouvement d'un véhicule lourd (100) pendant une manœuvre à risque minimal,
dans laquelle l'unité de commande de secours (280) est agencée pour recevoir des données indicatives d'une séquence planifiée de commandes de contrôle de véhicule (276) provenant d'une unité de commande de véhicule principale (270), dans laquelle la séquence planifiée de commandes de contrôle de véhicule représente la manœuvre à risque minimal, et dans laquelle la séquence planifiée de commandes de contrôle de véhicule comprend une séquence planifiée d'angles de braquage,
l'unité de commande de secours (280) comprenant un premier modèle de véhicule (281) configuré pour mettre en correspondance la séquence planifiée de commandes de contrôle de véhicule (276) avec un comportement de véhicule souhaité,
l'unité de commande de secours (280) étant en outre agencée pour obtenir un comportement de véhicule mesuré provenant d'un ou plusieurs capteurs de véhicule (290),
dans laquelle l'unité de commande de secours (280) est agencée pour déterminer une séquence ajustée de commandes de contrôle de véhicule (285) sur la base de la séquence planifiée de commandes de contrôle de véhicule (276) et sur la base d'un écart entre le comportement de véhicule souhaité et le comportement de véhicule mesuré, dans laquelle la séquence ajustée de commandes de contrôle de véhicule comprend en outre une commande de décélération configurée pour ralentir et/ou pour arrêter le véhicule lourd, et
pour transmettre la séquence ajustée de commandes de contrôle de véhicule (285) à une unité de commande de dispositif de support de mouvement, MSD, (230) du véhicule (100).

2. Unité de commande de secours (280) selon la revendication 1, dans laquelle le premier modèle de véhicule (281) est un modèle de véhicule statique, tel qu'un modèle de gain de lacet.

3. Unité de commande de secours (280) selon la revendication 1, dans laquelle le premier modèle de véhicule (281) est un modèle de véhicule dynamique, tel qu'un modèle monotrace linéaire.

4. Unité de commande de secours (280) selon une quelconque revendication précédente, dans laquelle le premier modèle de véhicule (281) est configuré pour délivrer en sortie un état attendu du véhicule lourd (100), où l'état attendu comprend l'un quelconque parmi une position latérale d'un point sur une unité de véhicule (110, 120) du véhicule lourd (100), un écart latéral par rapport à une trajectoire souhaitée d'un point de l'unité de véhicule (110, 120), une vitesse de lacet, une accélération latérale, une vitesse latérale, une position longitudinale, une accélération longitudinale, et une vitesse longitudinale de l'unité de véhicule (110, 120).

5. Unité de commande de secours (280) selon n'importe quelle revendication précédente, dans laquelle le premier modèle de véhicule (281) est agencé pour être aligné avec un second modèle de véhicule (272) compris dans l'unité de commande de véhicule principale (270).

6. Unité de commande de secours (280) selon la revendication 5, dans laquelle le premier modèle de véhicule (281) est agencé pour être aligné avec le second modèle de véhicule (272) par échange d'un nombre prédéterminé de valeurs de paramètres de modèle.

7. Unité de commande de secours (280) selon la revendication 6, dans laquelle les valeurs de paramètres de modèle échangées correspondent à l'une quelconque parmi une masse d'une unité de véhicule (110, 120) du véhicule (100), une inertie de lacet d'une unité de véhicule (110, 120), une rigidité de pneu, un niveau de friction de route, une vitesse longitudinale, une charge d'essieu, un empattement, une position d'attelage, et un type d'une unité de véhicule (110, 120).

8. Unité de commande de secours (280) selon l'une quelconque des revendications 5 à 7, dans laquelle le premier modèle de véhicule (281) est agencé pour être aligné avec le second modèle de véhicule (272) en ayant un ou plusieurs états correspondants ou identiques.

9. Unité de commande de secours (280) selon la revendication 1, dans laquelle la séquence planifiée d'angles de braquage est une séquence de vecteurs d'angles de braquage pour un ou plusieurs essieux directeurs du véhicule lourd (100).

10. Unité de commande de secours (280) selon la revendication 1, dans laquelle la séquence planifiée d'angles de braquage correspond à une séquence d'angles de roues directrices.

11. Unité de commande de secours (280) selon une quelconque revendication précédente, dans laquelle le comportement de véhicule souhaité et/ou le comportement de véhicule mesuré est représenté par l'un quelconque parmi une position latérale d'un point sur une unité de véhicule (110, 120) du véhicule lourd (100), une vitesse de lacet d'une unité de véhicule (110, 120), une accélération latérale d'une unité de véhicule (110, 120), une vitesse latérale d'une unité de véhicule (110, 120), et une dérive latérale de caisse d'une unité de véhicule (110, 120).

12. Unité de commande de secours (280) selon une quelconque revendication précédente, dans laquelle l'unité de commande de secours (280) est agencée pour transmettre la séquence ajustée de commandes de contrôle de véhicule (285) à l'unité de commande de MSD (230) du véhicule en réponse à un signal d'activation.

13. Unité de commande de secours (280) selon la revendication 12, dans laquelle le signal d'activation indique une défaillance dans le fonctionnement de l'unité de commande de véhicule principale (270).

14. Système (200) pour commander le mouvement d'un véhicule lourd (100),
le système (200) comprenant une unité de commande de secours (280) selon une quelconque revendication précédente,
le système (200) comprenant également une unité de commande de véhicule principale (270) configurée avec une fonction de suivi de trajectoire (271) agencée pour suivre une trajectoire de véhicule souhaitée, et un second modèle de véhicule (272) agencé pour modéliser une réponse par le véhicule (100) à une commande de braquage requise, où l'unité de commande de véhicule principale (270) est agencée pour générer une commande de contrôle de véhicule momentanée (275) et une séquence planifiée de commandes de contrôle de véhicule (276) ;
l'unité de commande de véhicule principale (270) étant également agencée pour transmettre la commande de braquage momentanée à une unité de commande de dispositif de support de mouvement, MSD, (230) et pour transmettre la séquence planifiée de commandes de contrôle de véhicule (276) à l'unité de commande de secours (280),
le système (200) comprenant en outre une unité de commande de MSD (230) agencée pour recevoir une commande de contrôle de véhicule.

15. Procédé mis en œuvre par ordinateur réalisé dans une unité de commande de secours (280) pour commander le mouvement d'un véhicule lourd (100) pendant une manœuvre à risque minimal, le véhicule lourd comprenant une unité de commande de véhicule principale (270) agencée pour générer une séquence planifiée de commandes de contrôle de véhicule (276), le véhicule lourd comprenant également une unité de commande de MSD (230) agencée pour recevoir une commande de contrôle de véhicule (275, 285), le procédé comprenant :
la configuration (S1) d'un premier modèle de véhicule (281) dans l'unité de commande de secours (280) ;
la réception (S2) d'une séquence planifiée de commandes de contrôle de véhicule (276) provenant de l'unité de commande de véhicule principale (270), dans laquelle la séquence planifiée de commandes de contrôle de véhicule représente la manœuvre à risque minimal, et dans laquelle la séquence planifiée de commandes de contrôle de véhicule comprend une séquence planifiée d'angles de braquage ;
la mise en correspondance (S3) de la séquence planifiée de commandes de contrôle de véhicule (276) avec un comportement de véhicule souhaité en utilisant le premier modèle de véhicule (281) ;
l'obtention (S4) d'un comportement de véhicule mesuré provenant d'une pluralité de capteurs (290) ;
la détermination (S5) d'une séquence ajustée de commandes de contrôle de véhicule (285) sur la base de la séquence planifiée de commandes de contrôle de véhicule (276) et sur la base d'un écart entre le comportement de véhicule souhaité et le comportement de véhicule mesuré, la séquence ajustée de commandes de contrôle de véhicule comprenant en outre une commande de décélération configurée pour ralentir et/ou pour arrêter le véhicule lourd ;
l'envoi (S6) de la séquence ajustée de commandes de contrôle de véhicule (285) à l'unité de commande de MSD (230).

16. Programme informatique (720) comprenant des moyens de code de programme pour réaliser les étapes de la revendication 17, lorsque ledit programme est exécuté sur un ordinateur ou sur une circuiterie de traitement (610) d'une unité de commande (130, 140).

17. Support lisible par ordinateur (710) portant un programme informatique (720) comprenant des moyens de code de programme pour réaliser les étapes de la revendication 17 lorsque ledit produit de programme est exécuté sur un ordinateur ou sur une circuiterie de traitement (610) d'une unité de commande (130, 140).
